Europäisches Patentamt

European Patent Office

Office européen des brevets

(11) Publication number: **0 395 193**
**A2**

# EUROPEAN PATENT APPLICATION

(21) Application number: **90300652.6**

(22) Date of filing: **22.01.90**

(51) Int. Cl.5: **G11B 5/584**

(30) Priority: **28.04.89 US 345373**

(43) Date of publication of application:
**31.10.90 Bulletin 90/44**

(84) Designated Contracting States:
**DE FR GB NL**

(71) Applicant: **AMPEX CORPORATION**
**401 Broadway M.S. 3-35**
**Redwood City California 94063-3199(US)**

(72) Inventor: **Eshel, Abraham**
**731 Winwood Court**
**Mountain View California 94040(US)**
Inventor: **Niedermeyer, Rex**
**28 Circle Road Redwood City**
**Mountain View California 94062(US)**

(74) Representative: **Horton, Andrew Robert Grant**
**et al**
**BOWLES HORTON Felden House Dower**
**Mews High Street**
**Berkhamsted Hertfordshire HP4 2BL(GB)**

(54) **Apparatus and method to improve uniformity of tent around scanner.**

(57) A scanner assembly for a magnetic tape recorder is arranged to vary the protrusion of the head into the tape, thereby to counteract the progressive change along the path of the tape in the air bearing formed between the tape and the scanner.

FIG. 1

# APPARATUS AND METHOD TO IMPROVE UNIFORMITY OF TENT AROUND SCANNER

## FIELD OF THE INVENTION

The present invention relates generally to an improved scanner assembly for a video tape recorder, and more particularly to an apparatus and method which maintains the relative tip penetration at the head to tape interface substantially constant over the length of a helical scan.

## BACKGROUND OF THE INVENTION

The video tape recorder is an exceedingly complex assembly. For example, when the video signal output is in the NTSC broadcast format, each video frame consists of 525 lines of information, of which about 400 lines constitute the visual image. Each frame is successively delivered to the video screen at a rate of about 30 frames per second in the delivery of the video image to the viewer. In a helical type video tape recorder the video information is written to, and read from, a magnetic tape moving along a helical path on the scanner assembly of the video tape recorder. The magnetic tape stores the video data in data tracks along the tape and one or more read/write heads are disposed in the scanner assembly of the video tape recorder to transfer the video signal to or from the magnetic tape.

A parameter of the video tape recorder critical to high quality video information is the head to tape interface; this relationship is dependent upon the structure and operation of the scanner assembly, such assembly containing the video read/write heads engaging the tape at the head to tape interface.

A typical scanner assembly includes a lower stationary drum mounted on a base. A rotating drum is mounted in the assembly. One or more heads extend through openings in the sidewall of the drum. That is, at each opening of the rotating drum, one or more read/write heads are positioned. The rotating drum may include one, two or more read/write openings and their respective heads. In operation, magnetic tape traverses a helical path which includes the stationary drum and the rotating drum so that the read/write heads contact the magnetic tape to allow the video data to be written to and read from the magnetic tape.

Thus the contact point of the head on the tape must be of an optimum configuration for data transfer. In particular, the tip of the head must engage the tape in a manner which maintains a constant level of tip penetration relative to the tape along the helical tape path to maximize the quality of the signal output of the video recorder.

As is known, the head tip engages the tape such that a slight lift or "tent" is created in the tape at the point of contact. It is desirable to support the tape at the head tip so that the head tip engages the "tent" of the tape. Too much lift or "tenting," such that the apex of the tape "tent" remains away from the apex of the head tip, results in loss of signal output by the record/reproduce head. It is desirable to minimize such loss by maintaining the relative penetration of the head tip into the tape at a constant level along the length of the helical tape path.

One way of maintaining a constant tip penetration of the head relative to the tape is to maintain a uniform spacing between the tape and the rotating scanner body. However, that spacing is a dynamic relationship involving several notable parameters. While the tape moves past the scanner at the rate of 10 to 20 inches per second, for example, the rate of scanner movement is substantially higher. For example, scanner movement is typically in the range of 3600 revolutions per minute (rpm) for Type C recorders and ranges up to 6000 rpms in some of the newer digital video tape recorders. One effect of this relative movement is an air film of non-uniform depth between the scanner and the tape, which partially supports the tape.

The air film between the scanner assembly and the tape at the head entrance region to the helical tape path provided on the scanner assembly is thicker than it is at the head exit region for the helical path of the scanner assembly. Moreover other factors inherent to the transit of the tape around the assembly can affect the thickness of the air film, such as tape tension, variations in pressure at the scanner window, the distance from the head to the tape edge, etc.

Variations in the above noted factors can contribute singly or in combination to changes in the relative tip projection with respect to the tape over the length of the helical tape path. Consequently a head contour profile would be affected by all of these elements, and produce a composite profile over the length of the helical tape path having a relatively thick air film and consequent low relative tip penetration at the head entrance region of the path to the relatively thin air film and the consequently greater penetration of the head tip into the tape at the head exit region of the tape path.

This variation in the thickness of the air film and resultant variation in head tip penetration results in changes in the head contour at the head to tape interface. Variations in head contour along the tape path contribute significantly to losses in signal output.

Head tip penetration was less important in older analog machines than it is in newer digital video tape recorders. With relatively thicker tapes and slower tape speeds and slower scanner speeds, there was no significant deterioration of performance over time and in fact it was typically found that after a "wear-in" period for the tape, that signal output improved for the "used" tape. However, newer machines require higher data rates and use thinner tapes to produce more recorded data per tape reel.

In some scanner assemblies the rotatable scanner drum rotates in the same direction as the direction of tape movement, in other configurations the drum rotates counter to the direction of tape movement. In another assembly a read/write head rotates between fixed upper and lower drums, across which the tape moves. All of these configurations for the scanner assembly may experience a loss of signal output at the high data rates noted above.

One notable concern is the deterioration in tape performance over time. That is, the "wear-in" period formerly produced improved signal output for a "used" tape over time. The "wear-in" of the head tip with respect to head tip penetration at the head to tape interface produced improved signal output and improved tape performance. However, there is no corresponding "wear-in" and its resultant improvement experienced with some thinner tapes and newer, faster machines. In fact, tape performance and signal output has been found to deteriorate substantially with time in some of the combinations of thinner tapes and newer digital machines noted above. Accordingly, the head tip penetration along the tape path has been examined with more detail in an effort to minimize the deterioration of tape performance over time.

In developing the solution to the problem of the deterioration in tape performance over time noted in the newer digital machines, it was decided to concentrate on the phenomenon of head tip penetration and in fact to reduce the theory of head tip penetration to its simplest common denominator. That is, how can head tip penetration be maintained at a constant depth relative to the tape along the entire length of the helical tape path around the drum.

Various schemes were undertaken to maintain the depth of head tip penetration at a constant level relative to the tape along the helical path which the tape followed as it moved from the rotatable drum to the stationary drum of the scanner assembly.

## SUMMARY OF THE INVENTION

In a preferred embodiment of the present invention, the stationary drum was displaced with respect to the central axis of the rotatable drum to thus displace the stationary drum away from the head entrance region of the helical path and toward the head exit region of the helical path so as to produce a constant level of head tip penetration relative to the tape along the length of the helical tape path.

The improved scanner assembly of the present invention provides a stationary drum having a central axis, a second drum mounted adjacent to the stationary drum and having a central axis about which said second drum rotates, a magnetic head having a base end and a tip end and disposed in the rotatable drum to protrude a tip end outwardly thereon, a helical path having a head entrance region and an head exit region and extending along a portion of the stationary drum and said rotatable drum, the central axis of the stationary drum displaced from the rotational axis of the rotatable drum and toward the head exit region of the helical path so as to control the relative spacing of the head tip with respect to the tape along said helical tape path, at a constant level along the length of the helical tape path.

A second embodiment increases or decreases air pressure at the scanner window so as to change the thickness of the air film between the tape and the scanner to modify the profile of head tip penetration along the helical tape path in a manner which minimizes the differences in head tip penetration along such path and favorably effects signal output of the recorder.

Further features and advantages of the subject invention can be obtained from a reading of the detailed description of the invention, particularly when such description is considered with the accompanying drawings as described below.

## BRIEF DESCRIPTION OF DRAWINGS

FIGURE 1 is a front perspective view of a scanner assembly incorporating the structure of the present invention.

FIGURE 2 is a schematic representation of the head to tape interface at the intersection of the upper and lower scanners with the prior art structure shown in solid lines and the configuration of the present invention shown in dotted lines, with certain features of the structure enlarged for clarity;

FIGURE 3 is a drawing of the respective prior art tape contours at the entrance and exit regions of the helical tape path;

FIGURE 4 is a composite head contour;

FIGURE 5 is the tape and head contours superimposed;

FIGURE 6 is a second embodiment of the present invention;

FIGURE 7 is a typical RF envelope profile of a prior art structure after an initial installation;

FIGURE 8 is a typical profile of an RF envelope of the prior art structure of FIGURE 7 after a "wear-in" period of 24 hours;

FIGURE 9 is a profile of an RF envelope of a second prior art structure;

FIGURE 10 is a profile of an RF envelope taken from a video tape recorder using the present invention, such envelope shown immediately after installation; and

FIGURE 11 is a profile of an RF envelope of the present invention, such envelope shown after a "wear-in" period of 24 hours;

## DETAILED DESCRIPTION

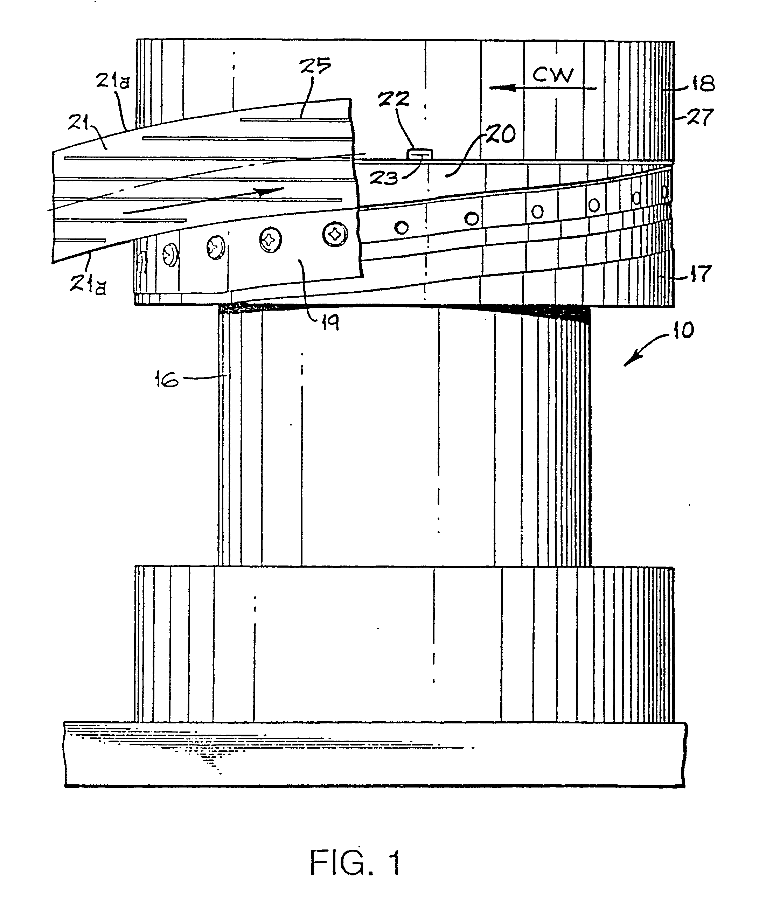

In accordance with the present invention, a scanner assembly 10 of a video tape recorder (not shown) comprises a lower stationary scanner drum 17 and upper rotatable drum 18. A rotating shaft (not shown) is mounted in the scanner assembly 10. The stationary drum is also mounted on the scanner assembly 10. A guide band 19 mounted on the lower stationary drum 17 defines a path 20 for a magnetic recording tape 21. In the illustration of Figure 1, the movement of the tape 21 is from left to right and the rotation of the scanner drum 18 is in a direction opposite to the movement of the tape 21, that is, clockwise. However the principles of tape transfer associated with the invention are equally applicable in a scanner assembly in which the tape and the drum are rotating in the same direction or in a scanner assembly in which a rotating head rotates between two stationary drums.

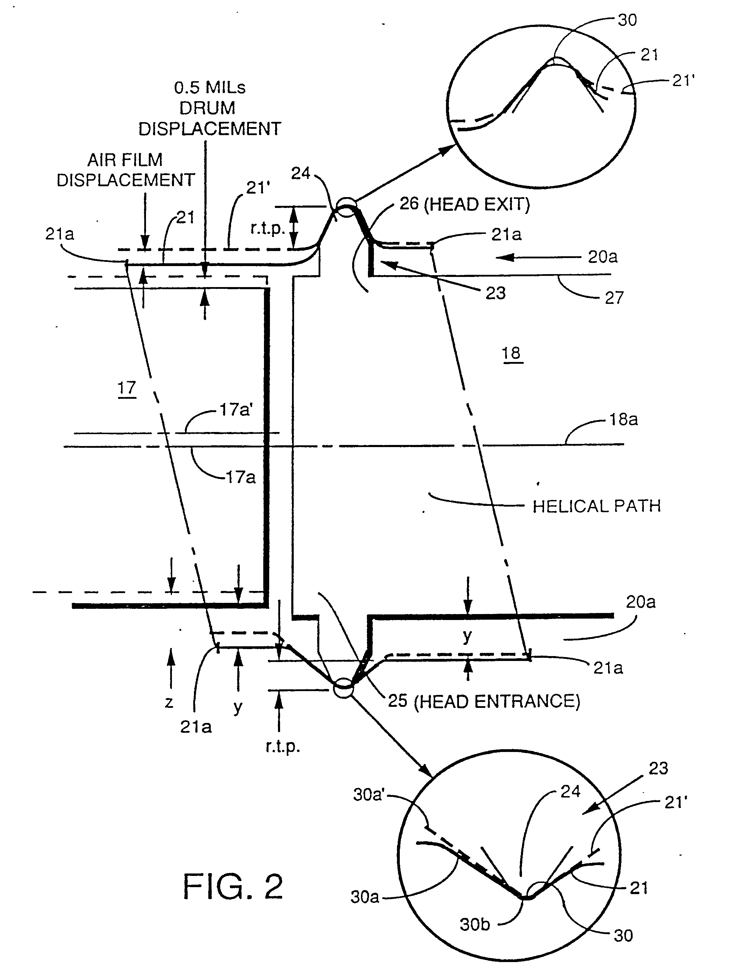

Disposed in the rotatable drum 18 are scanner windows 22, through which read/write heads 23 protrude. In Figure 1, a single read/write head 23 is shown at the front of the rotatable drum 18. Although a single read/write head 23 is shown in the preferred embodiment of the present invention, other configurations are possible. For example, scanner windows 22 each provide an opening through which a tip end 24 (Figure 2) of a read/write head 23 protrudes, and the windows 22 may be positioned at spaced locations at the periphery of the rotatable drum 18. Typically, multiple positions for scanner windows 22 and their corresponding read/write heads 23 may be at spacings of 90, 120 or 180 degrees at the periphery of the rotatable drum 18 to provide 4, 3 or 2 windows 22 respectively in the rotatable scanner drum 18. It is also possible to have multiple heads protruding from the same window 22.

Typically, as the tape 21 moves along the path 20 defined by the guideband 19, the scanner drum 18 rotates counter to the movement of tape 21 to read data tracks 25 disposed on the tape 21. The relative movement of the tape 21 and the rotatable drum 18 also serve to generate an air film 20a (Figure 2) which supports the tape 21 and also displaces it from an outer surface 27 of the rotating drum 18.

With reference to the present invention, it should be noted that a particularly critical element in the relationship between the scanner assembly 10 and the magnetic recording tape 21 which it reads from or writes to is the head to tape interface. At that interface the tip end 24 of the read/write head 23 engages and slightly lifts or "tents" the tape 21 at the head tip 24 as it reads from the tape 21.

It is desirable to support the tape 21 at the head tip 24 so that the head tip 24 engages a "tent" 30a of the tape 21 at its apex 30b and too much lift or "tenting" raises the apex 30b of the tape tent 30a away from an apex 30 of the head tip 24, with a resultant loss of signal output by the record/reproduce head 23. Figure 2 examines the head to tape interface at head entrance region 25 and head exit region 26 of the helical path 20 on the scanner assembly 10. At the head entrance region 25 of the helical tape path 20, the tape 21 is partially supported by the air film 20a which displaces the tape 21 a distance $\underline{y}$ from the outer surface 27 of the rotatable scanner drum 18. The tip end 24 of the head 23 engages the tape 21 so that the apex 30 of the tip end 24 is in engagement with the tape 21. Also note that at the head entrance region 25 of tape path 20, a major portion of the width of the tape 21 overlies the rotatable drum 18 which thus has an influence on the thickness $\underline{y}$ of the air film 20a at the interface of the tape 21 and the rotating outer surface 27 of the rotatable drum 18.

However, the complexity of the head to tape interface requires a discussion of "bleeding". Whether both the upper drum 18 and the lower drum 17 are stationary, with only a rotating head 23 between, or the upper drum 18 rotates either counter to or in the direction of movement of the tape 21, pressure generated by the relative movement of the tape 21 with respect to the rotating head 23 or the rotating drum 18, produces an air film 20a along the helical path 20 of the tape 21 along the scanner assembly 10.

Generally, the air pressure between the tape 21 and the surface 27 of the drum 18 is greatest at the head entrance region exit 25 of the helical tape path 20 to produce the thickest portion of the air film 20a at head entrance region 25, with a consequent reduction in the thickness of the air film 20a produced by "bleeding" along opposite tape edges 21a to reduce the air film 20a to its thinnest point at the head exit region 26 of the helical path 20.

Note in Figure 2 that at the head entrance region 25 of the tape path 20 the thickness y of the air film 20a is greater than at the head exit region 26. At the head exit region 26 of the helical path 20, the thickness of the air film 20a is substantially less. Thus, configuring the scanner assembly 10 to rotate counter to the direction of movement of the tape 21 does not solve the problem of variations of thickness in the air film 20a along the helical path 20.

In Figure 2, in a preferred embodiment of the present invention, the configuration of the scanner assembly 10 is modified as shown in dotted lines, to displace the stationary drum 17, toward the head exit region 26 of the helical path 20. The amount of drum displacement is 0.5 mils, with a central axis 17a' of the displaced stationary drum 17', generally parallel to but displaced from the rotational axis 18a of the rotatable drum 18 by 0.5 mils as well. In the prior scanner assembly, the central axis 17a of the stationary drum 17 is the same as the rotational axis 18a of the rotatable drum 18. Note that while there is no substantial change in the air film 20a at the head entrance region 25 of the helical path 20, displacement of the scanner drum 17 also displaces the air film 20a associated with the stationary drum 17 at the head exit region 26 of the helical path 20 to thereby change the profile of the head to tip interface at the head exit region 26 to a profile much more like the profile at the head entrance region 25 of the helical path 20, and to produce a constant relative head tip penetration along the helical tape path 20.

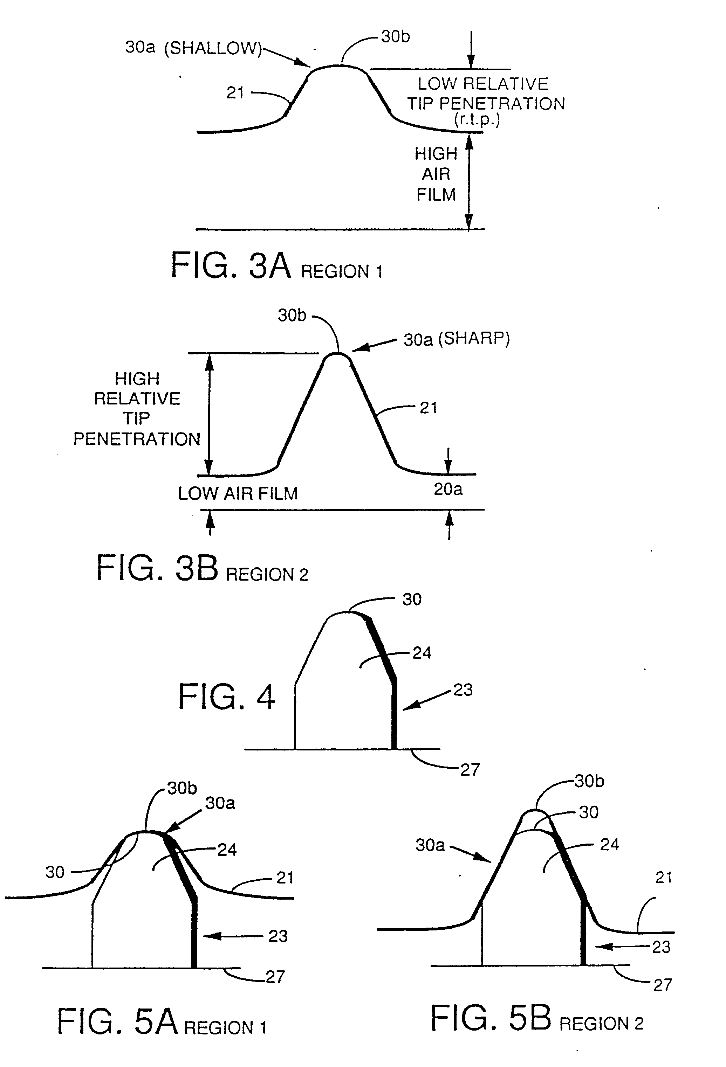

Figure 2, when considered in conjunction with the figures 3, 4 and 5 indicate head tip penetration at the entrance and exit regions of the helical path. However, it should be recognized that a displacement of the air film 20a does not produce a corresponding level of change in the gap at the "tent" of the head to tape interface. That is, if the air film 20a is displaced 0.5 mils, for example, the separation between the apex 30 of head tip 24 and the tape 20 in the head exit region 26 (region 2) of the tape path 20, is reduced in the order of micro-inches and produces a tape profile at the head exit region 26 (region 2) that is consistent with the head entrance region 25 (region 1) profile, and a constant relative head tip penetration along the helical tape path 20.

Relative tip penetration (r.t.p.) is the distance that the head 23 penetrates into the tape 21 as compared to the surrounding tape 21. The r.t.p. must be at a relatively constant depth along the entire tape path 20 to assure an optimum signal output.

For example, examine Figure 3 which shows the tape 21 alone in the head entrance region 25 or region 1 of the tape 21, wherein a tent 30a, formed by the engagement of the head tip 24 with the tape 21, is relatively shallow. That is, there is a low relative penetration of the tip 24 with respect to the tape 20, which causes the apex 30 of the head tip 24 to engage the tape 21 and produce a substantially improved signal output. At the exit region 26 or region 2, of tape path 20, there is relatively high tip penetration and a relatively thinner air film 20a. Figure 4 merely shows a composite head contour for the head 23 having a tip end 24. Figure 5 superimposes tape 21 on the tip 24 to show a relatively low tip penetration in region 1 and a relatively high tip penetration in region 2 with the tip end 24 not contacting the tape 21 at the apex 30 of the head to tape interface as shown in region 2 of Figure 5. The most desirable configuration for optimum signal output is maximum head contact of the head tip 24 with the tape 21 throughout the tape path 20.

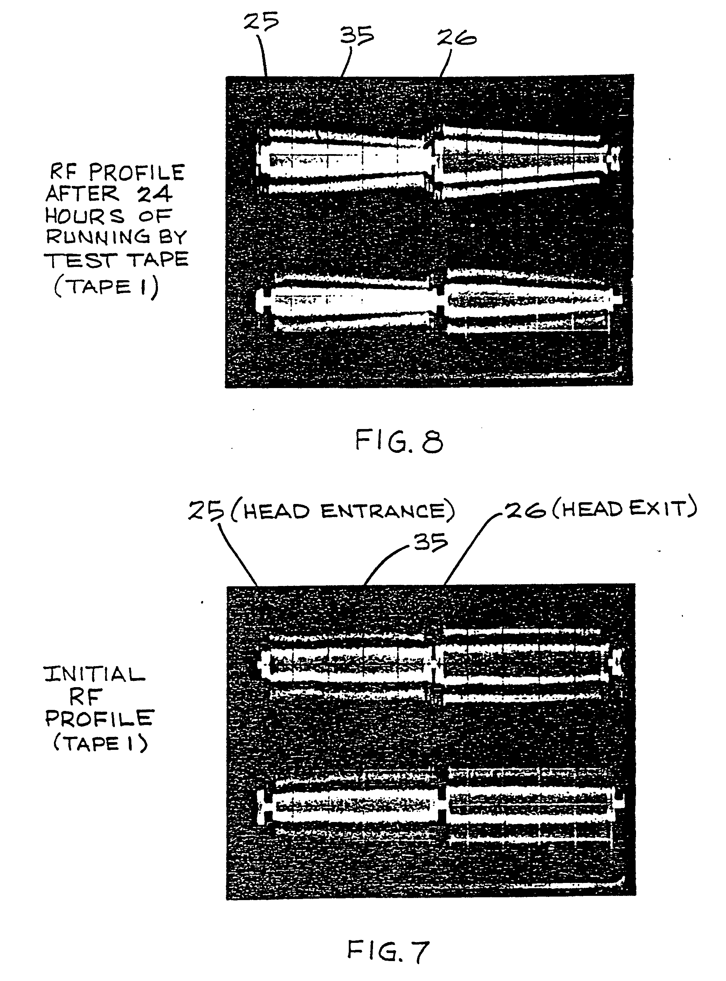

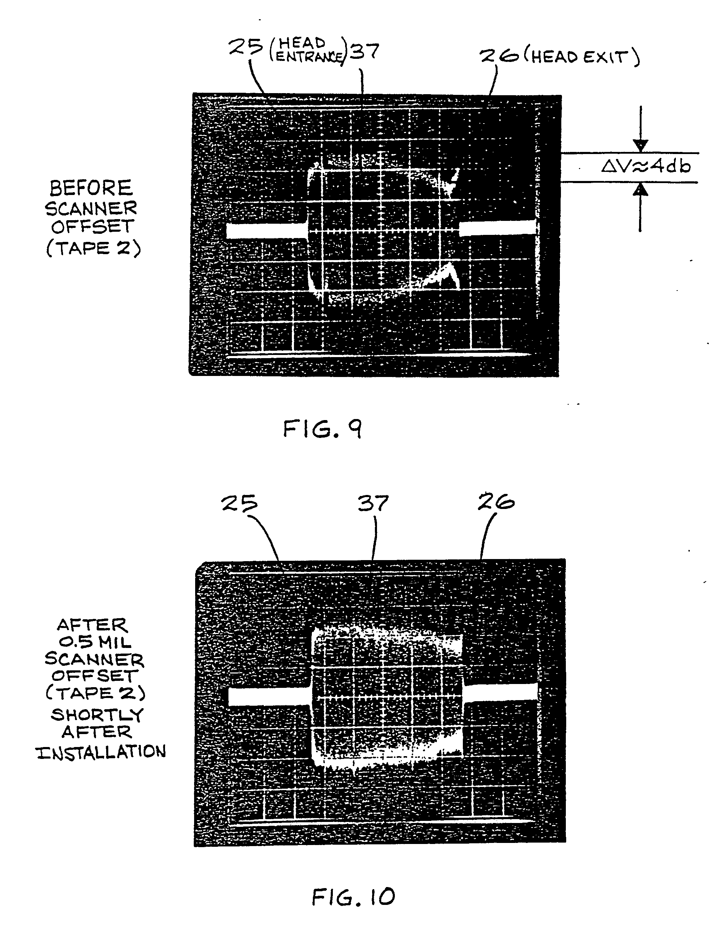

The effect of the disparity between head tip penetration at the head entrance region 25 and at the head exit region 26 of the helical path 20 can be seen in Figures 7 and 8 which show a loss of signal and a deterioration of an RF envelope 35 over time, particularly showing the loss of signal at the exit region 26 of the RF envelope 35.

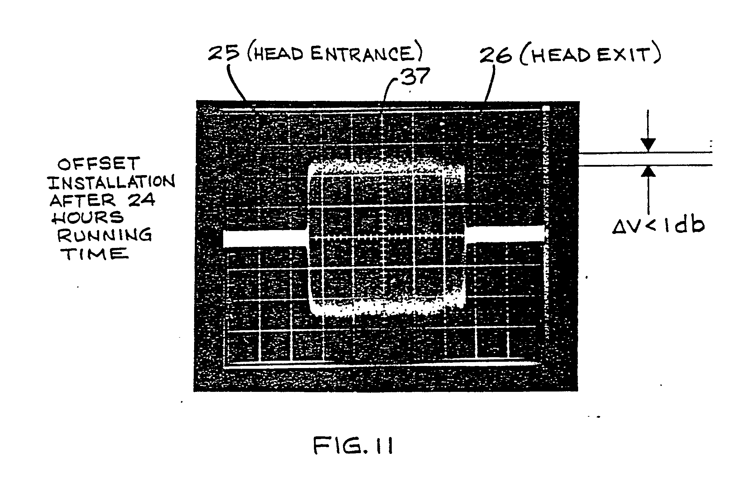

The displacement of the stationary drum 17 toward the head exit region 26 of the helical path 20 produces a dramatic improvement in signal output for the head 23. The change in relative tip penetration with respect to the tape 21 at the head exit region 26 of the helical path 20 can be related to a corresponding improvement in signal output as evidenced by Figure 10. Note also that Figure 10 represents a reading of signal output shortly after the displacement of the lower drum 17 toward the head exit region 26 of the helical path 20. Following a 24 hour wear-in period signal output is further improved to the RF envelope profile 37 shown in figure 11 which shows a relative loss of signal of less than 1 db from the head entrance region 25 to the head exit region 26 of the RF envelope 37 as compared to a loss of signal of 4 db in the prior art configuration of Figure 9.

The improvement in signal output produced by the preferred embodiment can also be accomplished through the use of alternative embodiments which either adjust head tip penetration to a constant depth relative to the tape along the helical path 20 by varying the tip projection relative to the scanner or manipulate the air film 20a associated with the helical path 20 to effectively adjust head tip penetration to a constant depth relative to the tape along the helical tape path by changing the thickness of the air film 20a.

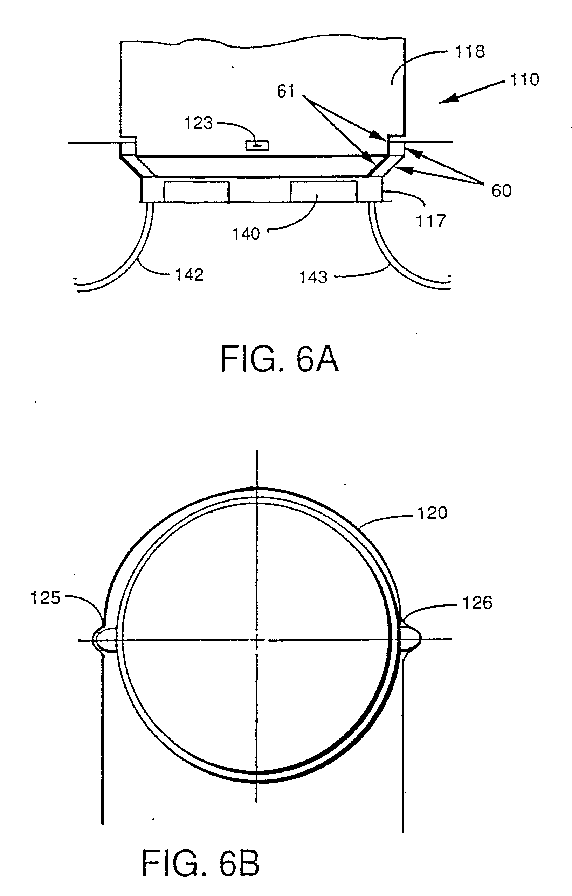

For example in Figure 6, in a second embodiment of the present invention, a scanner assembly 110 manipulates the pressure around a head 123 to manipulate the depth of head tip penetration relative to the tape at various points along a helical path 120. Such a change is accomplished by mounting a vane structure 140 in a rotatable drum 118, a stationary drum 117, or both, which would alter the pressure at opposite end regions 125, 126 of the helical path 120. It may also be possible to manipulate the pressure gradient along the helical path by air lubrication effects such as by utilizing the inner surface 60 of the stationary drum 117 as a shroud located eccentrically to the axis of rotation of a surface 61 of the drum 118. A third alternative construction either injects air into or draws air out of the helical path 120, as by suction tubes 142 or air injection tubes 143 so as to manipulate relative head tip penetration of the tape 21 at the head to tape interface.

It also may be possible to incorporate within the scanner assembly 10 a mechanism which varies the head tip penetration as a function of location, to extend the head 23 at the position corresponding to the entrance region 25 of the helical path 20 and to retract the head 23 at the position corresponding to the exit region 26 of the helical path 20 so as to provide a constant relative head tip penetration along the entire length of the helical path 20.

**Claims**

1. A scanner assembly for a magnetic tape recorder comprising: a first drum (17); a second drum (18) mounted adjacent the first drum; at least one magnetic head (23), disposed for rotation in a path around the periphery of the second drum, the arrangement being such that the tape (21) extends in a helical path partly about the drums and in operation an air bearing is formed beneath the tape, characterised in that the assembly is arranged to compensate for variation along the helical path of the protrusion of the head into the tape.

2. A scanner assembly according to claim 1 in which the the drums (17, 18) are cylindrical, the said path extends from an entrance region to an exit region and the central axis of the first drum (17) is offset from the central axis of the second drum (18) towards the said exit region.

3. a scanner acording to claim 2 in which the first drum is a stationary drum and the second drum rotates with and carries the head.

4. A scanner according to claim 1 in which means (140; 142) are provided for varying the pressure of the air bearing.

5. A scanner assembly for a magnetic tape recorder comprising: a stationary drum (17) having a central axis; a second drum mounted adjacent the stationary drum and having a central axis about which said second drum rotates; at least one magnetic head (23), having a base end for mounting the head for rotation in the rotatable drum and a tip end for reading from and writing to the tape (21), and disposed in the rotatable drum to protrude a tip end outwardly thereof; and a helical tape path extending along a portion of the stationary drum and the rotatable drum, said helical tape path having a head entrance region and a head exit region, the stationary drum and its central axis being offset from the rotational axis of the rotatable drum and toward the head exit region of the helical tape path, so as to control the relative protrusion of the head tip with respect to the tape along said helical tape path, at a substantially constant level relative to the tape along the length of the path.

6. A scanner assembly for a magnetic tape recorder comprising: a stationary drum (17) mounted on a central axis in the scanner assembly; a rotatable drum mounted for rotation on an axis in the scanner assembly; at least one magnetic read/write head (23) having a base end and a tip end, and disposed in the rotatable drum to protrude a tip end outwardly thereof; a helical path on the scanner assembly; and a control apparatus provided in the scanner assembly and associated with the tip, to control the depth of head tip protrusion with respect to the tape (21) along said helical tape path.

FIG. 1

FIG. 2

FIG. 3A REGION 1

FIG. 3B REGION 2

FIG. 4

FIG. 5A REGION 1

FIG. 5B REGION 2

FIG. 6A

FIG. 6B

RF PROFILE
AFTER 24
HOURS OF
RUNNING BY
TEST TAPE
(TAPE I)

FIG. 8

INITIAL
RF
PROFILE
(TAPE I)

FIG. 7

25 (HEAD ENTRANCE) 37     26 (HEAD EXIT)

BEFORE
SCANNER
OFFSET
(TAPE 2)

ΔV≈4db

FIG. 9

25          37          26

AFTER
0.5 MIL
SCANNER
OFFSET
(TAPE 2)
SHORTLY
AFTER
INSTALLATION

FIG. 10

FIG. 11